# EUROPÄISCHE PATENTSCHRIFT

(11) **EP 0 518 344 B1**
(45) Veröffentlichungstag und Bekanntmachung des Hinweises auf die Patenterteilung: **05.08.1998**
(21) Anmeldenummer: 92109880.2
(22) Anmeldetag: 11.06.1992
(51) Int. Cl.: H04Q 7/24

(54) **Verbindungsaufbau zwischen Endgeräten für mobile Teilnehmer eines Netzverbundes**
Connection set-up between networked mobile subscriber terminals
Etablissement d'une connexion entre terminaux mobiles d'abonnés de réseaux groupés

(30) Priorität: 14.06.1991 DE 4119672
(43) Veröffentlichungstag der Anmeldung: 16.12.1992
(73) Patentinhaber: ALCATEL ALSTHOM COMPAGNIE GENERALE D'ELECTRICITE, 75008 Paris (FR)
(72) Erfinder: Rothenhöfer, Karl, W-7250 Leonberg (DE)
(74) Vertreter: Knecht, Ulrich Karl, Dipl.-Ing.

(56) Entgegenhaltungen:
- US-A- 4 833 701
- US-A- 4 980 907
- TELCOM REPORT Bd. 12, Nr. 4, 1989, MUNCHEN DE Seiten 102 - 105 ESKE-CHRISTENSEN ET AL. 'Intelligente Netze - leistungsfähige Basis für zukünftige Dienste'

## Beschreibung

Dienstteilnehmer und Netzbetreiber verlangen in zunehmendem Maße schnelleren und umfassenderen Zugang zu bestehenden und neuen Diensten. Hierzu wird das Konzept des intelligenten Netzes IN verwendet. Grundgedanke ist die Einführung einer Steuerungsschicht, welche die Dienstedaten und die Dienstelogik zentralisiert enthält und die Abwicklung der Dienste in einem Telekommunikationsnetz regelt.

Für ein solches Telekommunikationsnetz für das paneuropäische digitale zellulare Mobilfunksystem GSM hat die europäische Konferenz der Post- und Fernmeldeverwaltungen Standards festgelegt.

Dabei wird zum Herstellen einer Verbindung für mobile Funkteilnehmer in diesem Netz, nach Abnahme des Handapparates oder nach Einstecken einer Berechtigungskarte des bzw. in ein Endgerät eine Kennung zur Mobilfunkvermittlung MSC übertragen, die eine intelligente Netzfunktion ausübt. Die Mobilfunkvermittlung fragt die sogenannte Besucherdatei (visiting location register = VLR) und/oder Heimatdatei (home location register = HLR) ab und baut mit den so ermittelten Daten eine Verbindung auf ("Intelligente Netze - leistungsfähige Basis für zukünftige Dienste", B. Eske-Christensen, K. Schreier, D. Stroh, telecon report 12 (1989), Heft 4, Seiten 102-105).

Der Erfindung liegt die Aufgabe zugrunde, eine Verbindung zwischen zwei Endgeräten für mobile Teilnehmer auch dann zu realisieren, wenn die Endgeräte irgendwo in einem Netzverbund aus einer Vielzahl von privaten und/oder virtuellen privaten Netzen und öffentlichen Netzen angeschlossen sind.

Diese Aufgabe wird erfindungsgemäß durch die technische Lehre des Patentanspruchs 1 gelöst.

Erfindungsgemäß werden den privaten oder den virtuellen privaten Netzen intelligente Netzwerkfunktionen zum Steuern der komplexen Aufgaben zugeordnet. Durch die Eingabe einer eine Netzausscheidungskennung enthaltenden Wahlinformation wird dann eine Datenverbindung zu einem Dienststeuerpunkt des privaten oder des virtuellen privaten Netzes aufgebaut, so daß die Funktionen des intelligenten Netzwerkes zum Ermitteln der Wahlinformation verwendbar sind.

Insbesondere ist auch in Abhängigkeit eines gewünschten Dienstes oder in Abhängigkeit von unterschiedlichen Gebührentarifen die jeweils günstigste Verbindung ermittelbar.

Weitere vorteilhafte Ausgestaltungen des Gegenstandes der Erfindung sind den abhängigen Ansprüchen zu entnehmen.

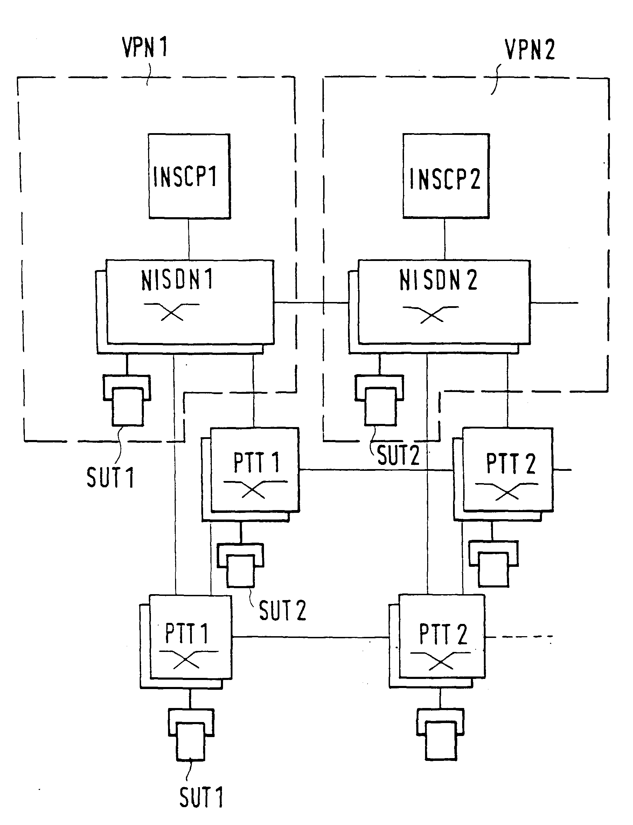

Ein Ausführungsbeispiel gemäß der Erfindung wird im folgenden anhand der Zeichnung erläutert.

Die Zeichnung zeigt ein Blockschaltbild für einen Netzverbund aus virtuellen privaten Netzen und öffentlichen Netzen.

Zur Erläuterung des erfindungsgemäßen Verfahrens wird von einem Netzverbund aus einem ersten virtuellen privaten diensteintegrierenden Netz VPN1 und einem zweiten virtuellen privaten diensteintegrierenden Netz VPN2 sowie aus öffentlichen Netzen PTT1, PTT2, wie in der Figur gezeigt, ausgegangen.

Die beiden virtuellen privaten Netze VPN1, VPN2 enthalten Vermittlungsstellen NISDN1, NISDN2, denen Dienststeuerpunkte INSCP1, INSCP2, d.h. sogenannte Service Control Points eines intelligenten Netzwerkes, zugeordnet sind. Ein Aufbau solcher intelligenter Netzwerke und deren allgemeine Funktionsbeschreibung ist z.B. aus "Intelligent Networks", von W. Rink, in Nachrichtentech., Elektron., Berlin 40 (1990), Heft 5, Seiten 162-164 zu entnehmen.

In diesem Netzverbund sind Endgeräte SUT1, SUT2 für mobile Teilnehmer, wie in der Figur gezeigt, z.B. mit einer Vermittlungsstelle NISDN1 eines virtuellen privaten Netzes oder öffentlicher Netze PTT1 verbunden.

Zum Herstellen einer Verbindung zwischen einem ersten Endgerät SUT1 und einem zweiten Endgerät SUT2 eines mobilen Teilnehmers muß zunächst eine Wahlinformation in das erste Endgerät SUT1 eingegeben werden, wobei die Wahlinformation eine das virtuelle private Netz des Zielteilnehmers kennzeichnende Netzausscheidungskennung enthält.

Geht man nun davon aus, daß das erste Endgerät mit dem durch die Netzausscheidungskennung vorgegebenen virtuellen privaten Netz VPN1 verbunden ist, so wird nun eine Datenverbindung zum Dienststeuerpunkt INSCP1 des Netzes aufgebaut. Wesentlich ist deshalb, daß das Endgerät SUT1 eine entsprechende Information über das zugehörige Netz (ob virtuelles privates Netz oder öffentliches Netz) fest abgespeichert enthält.

Ist dagegen das erste Endgerät mit einer Vermittlungsstelle des öffentlichen Netzes verbunden, so wird mit Hilfe der im Endgerät abgespeicherten Information zunächst eine Datenverbindung zu einem Netzübergabepunkt hergestellt und dann eine Datenverbindung zu dem ihm zugeordneten Dienststeuerpunkt INSCP1 seines virtuellen privaten Netzes.

In vorteilhafter Weise wird die Datenverbindung mittels einer Teilnehmer-Teilnehmer-Signalisierung (user-to-user-signalling) unter Benutzung von D-Kanal und einem zentralen Zeichengabekanal (CCITT-Zeichengabesystems Nr. 7) aufgebaut. Das virtuelle private diensteintegrierende Netz kann entsprechend verfahren.

Aus der über die aufgebaute Datenverbindung übertragenen, vom Teilnehmer eingegebenen Wahlinformation wird nun durch den Dienststeuerpunkt INSCP1 unter Auswertung einer sogenannten Besucherdatei (visiting location register = VLR) und/oder einer Heimatdatei (home location register = HLR) der aktuelle Aufenthalt des Zielteilnehmers, d.h. des zweiten Endgerätes SUT2 ermittelt und ein geeigneter Weg für den Verbindungsaufbau und der zugehörigen Wahlinformation festgestellt.

Da es sich um ein diensteintegrierendes Netz handelt, kann zusätzlich auch eine Kennung für einen gewünschten Dienst eingegeben und zum Dienststeuerpunkt übertragen werden. Dann werden nur solche für diesen Dienst verfügbare Verbindungsmöglichkeiten durch den Dienststeuerpunkt INSCP1 mit berücksichtigt.

Weiterhin können auch die für die möglichen Verbindungen zu berücksichtigenden unterschiedlichen Gebührentarife (z.B. abhängig von Tageszeiten) so berücksichtigt werden, daß eine Wahlinformation für eine möglichst kostengünstige Verbindung ermittelt wird.

Falls eine Verbindung zwischen einem virtuellen privaten Teilnehmer über ein Endgerät eines öffentlichen Netzes zu einem fernen virtuellen privaten Teilnehmer an virtuellen privaten Netzen ermöglicht werden soll, kann durch den Dienststeuerpunkt INSCP1 eine Wahlinformation unter Verwendung einer Unteradressierung (Subaddressing) gemäß einer CCITT-Empfehlung I.330 ermittelt werden.

Eine unter Berücksichtigung all dieser Parameter durch den Dienststeuerpunkt INSCP1 ermittelte Wahlinformation zum Erreichen des gewünschten Zielteilnehmers wird dann über die Datenverbindung zum ersten Endgerät SUT1 übertragen und anschließend vorzugsweise automatisch durch das Endgerät ausgewählt.

Um in einem virtuellen privaten Netz eine zentrale Gebührenverwaltung zu ermöglichen, wird die zuvor genannte Datenverbindung dazu benutzt, um die Gebühreninformation, die für die Verbindung dem erstem Endgerät belastet wird, jeweils dem Dienststeuerpunkt INSCP1 weiterzuleiten.

An der Stelle von virtuellen privaten Netzen, wie zuvor beschrieben, können in analoger Weise auch Verbindungen in private Netze aufgebaut werden.

Somit kann, wie zuvor beschrieben, aufgrund der Einführung einer Netzausscheidungskennung und der Ausnutzung von den privaten oder virtuellen privaten Netzen zugeordneten intelligenten Netzwerkfunktionen in einem Netzverbund jegliche Verbindung unter Berücksichtigung der verschiedensten Parameter (Dienstart, Gebühren, etc.) eine Verbindung zwischen Endgeräten für mobile Teilnehmer hergestellt werden. Dabei kann zusätzlich noch für die privaten oder virtuellen privaten Netze eine zentralisierte Gebührenverwaltung ermöglicht werden.

## Patentansprüche

1. Verfahren zum Herstellen einer Verbindung zwischen zwei Endgeräten (SUT1, SUT2) für mobile Teilnehmer eines Netzverbundes aus einer Vielzahl privater oder virtueller privater dienstintegrierender Netze (VPN1, VPN2) und öffentlicher Netze (PTT1, PTT2), wobei die privaten oder virtuellen privaten Netze (VPN1, VPN2) Vermittlungsstellen (NISDN1, NISDN2) mit zugeordneten Dienststeuerpunkten (INSCP1, INSCP2) eines intelligenten Netzwerkes enthalten, bestehend aus folgenden Schritten:
- Eingeben einer Wahlinformation in ein erstes Endgerät, die eine ein privates oder ein virtuelles privates Netz des Zielteilnehmers kennzeichnende Netzausscheidungskennung enthält,
- Aufbauen einer Datenverbindung zu einem Dienststeuerpunkt (INSCP1) des privaten oder des virtuellen privaten Netzes (VPN1) zum Übertragen der eingegebenen Wahlinformation, falls das erste Endgerät mit dem privaten bzw. dem virtuellen privaten Netz (VPN1) verbunden ist oder
- Aufbauen einer Datenverbindung über einen Netzübergabepunkt zu einem Dienststeuerpunkt (INSCP1) des privaten oder des virtuellen privaten Netzes zum Übertragen der eingegebenen Wahlinformation, falls das erste Endgerät nicht mit dem privaten oder dem virtuellen privaten Netz (VPN1) verbunden ist,
- Ermitteln des aktuellen Aufenthaltsortes des Zielteilnehmers durch den Dienststeuerpunkt (INSCP1) unter Verwendung einer Besucherdatei (visiting location register = VLR) und/oder einer Heimatdatai (home location register = HLR),
- Ermitteln eines Weges zum Zielteilnehmer mit zugeordneter Wahlinformation,
- Senden der ermittelten Wahlinformation über die Datenverbindung zum ersten Endgerät (SUT1) und
- Auswählen der empfangenen Wahlinformation durch das erste Endgerät.

2. Verfahren nach Anspruch 1, bestehend aus folgendem Schritt:
- Aufbauen der Datenverbindung mittels einer Teilnehmer-Teilnehmer-Signalisierung (user-to-user-signalling) über einen zentralen Zeichengabekanal unter Benutzung des CCITT-Zeichengabesystems Nr. 7.

3. Verfahren nach Anspruch 1 oder 2, bestehend aus folgenden Schritten:
- Eingeben der Wahlinformation in das erste Endgerät und Hinzufügen einer einen gewünschten Dienst angebenden Kennung und
- Ermitteln der Wahlinformation durch den Dienststeuerpunkt (INSCP1) unter Auswertung der nur für den gewünschten Dienst verfügbaren Verbindungsmöglichkeiten.

4. Verfahren nach Anspruch 3, bestehend aus folgendem Schritt:
- Ermitteln der Wahlinformation durch den Dienststeuerpunkt (INSCP1) unter Auswertung von den für die möglichen Verbindungen zu berücksichtigenden Gebührentarifen.

5. Verfahren nach Anspruch 3, bestehend aus folgendem Schritt:
- Ermitteln der Wahlinformation durch den Dienststeuerpunkt (INSCP1) unter Verwendung einer Unteradressierung (Subaddressing) nach einer CCITT-Empfehlung I.330 zum Ermöglichen von Verbindungen zwischen Teilnehmern eines privaten oder virtuellen privaten Netzes (VPN1, VPN2) über Endgeräte eines öffentlichen Netzes und Teilnehmern weiterer privater oder virtuellen privaten Netze an Endgeräten der weiteren privaten oder virtuellen privaten Netze.

6. Verfahren nach Anspruch 1, bestehend aus folgendem Schritt:
- Übertragen einer für die zwischen den beiden Endgeräten aufgebauten Verbindung festgestellten Gebühreninformation vom ersten Endgerät über die Datenverbindung zum Dienststeuerpunkt (INSCP1) zur Gebührenverwaltung für das privaten oder virtuelle private Netz.

## Claims

1. Method of establishing a connection between two terminals (SUT1, SUT2) for mobile subscribers of an interconnected plurality of private or virtual private integrated services networks (VPN1, VPN2) and public networks (PTT1, PTT2), the virtual private networks (VPN1, VPN2) containing exchanges (NISDN1, NISDN2) with associated service control points (INSCP1, INSCP2) of an intelligent network, comprising the following steps:
- entering dialing information into a first terminal, said dialing information containing a network discriminating digit identifying the virtual private network of a desired subscriber;
- setting up a data path to a service control point (INSCP1) of the private or the virtual private network (VPN1) for transmitting the dialing information if the first terminal is connected to the private or the virtual private network (VPN1), or
- setting up a data path via an internet signaling interwork transfer point to a service control point (INSCP1) of the private or the virtual private network for transmitting the dialing information if the first terminal is not connected to the private or the virtual private network (VPN1);
- determining the current location of the desired subscriber by means of the service control point (INSCP1) using a visiting location register and/or a home location register;
- determining a path to the desired subscriber with associated dialing information;
- transmitting the determined dialing information over the data path to the first terminal (SUT1), and
- selecting the received dialing information by means of the first terminal.

2. A method as claimed in claim 1 and comprising the following step:
- setting up a data path by user-to-user signaling over a common signaling channel using the CCITT No. 7 Signaling System.

3. A method as claimed in claim 1 or 2 and comprising the following steps:
- entering the dialing information into the first terminal and adding an identification character specifying a desired service, and
- determining the dialing information in the service control point (INSCP1) by evaluating the connection possibilities available only for the desired service.

4. A method as claimed in claim 3 and comprising the following step:
- determining the dialing information in the service control point (INSCP1) by evaluating the tariff rates to be taken into account for the possible connections.

5. A method as claimed in claim 3 and comprising the following step:
- determining the dialing information in the service control point (INSCP1) by using a sub-addressing method as specified in CCITT Recommendation I.330 for permitting connections between subscribers of a private or a virtual private network (VPN1, VPN2) via terminals of a public network and subscribers of further private or virtual private networks at terminals of the further private or virtual private networks.

6. A method as claimed in claim 1 and comprising the following step:
- transmitting call-charge information determined for the connection established between the two terminals from the first terminal over the data path to the service control point (INSCP1) for tariff and charging administration for the private or the virtual private network.

## Revendications

1. Procédé pour l'établissement d'une communication entre deux terminaux (SUT1, SUT2) pour des abonnés mobiles d'une interconnexion de réseau constitué d'un grand nombre de réseaux privés ou réseau privés virtuels et intégrant des services (VPN1, VPN2) et de réseaux publics (PTT1, PTT2), les réseaux privés ou privés virtuels (VPN1, VPN2) contenant des centres de commutation (NISDN1, NISDN2) avec des points de commande de services attribués (INSCP1, INSCP2) d'un réseau intelligent, comprenant les étapes suivantes :
- entrée d'une information de sélection dans un premier terminal, qui contient un code de discrimination de réseau caractérisant un réseau privé ou un réseau privé virtuel de l'abonné destinataire,
- mise en place d'une liaison de données avec un point de commande de services (INSCP1) du réseau privé ou réseau privé virtuel (VPN1) pour la transmission de l'information de sélection entrée, si le premier terminal est relié au réseau privé ou au réseau privé virtuel (VPN1) ou
- mise en place d'une liaison de données par un point de transfert de réseau avec un point de commande de services (TNSCP1) du réseau privé ou du réseau privé virtuel pour la transmission de l'information de sélection entrée, si le premier terminal n'est pas relié au réseau privé ou au réseau privé virtuel (VPN1),
- détermination du lieu de séjour actuel de l'abonné destinataire par le point de commande de services (TNSCP1) en utilisant un fichier visiteurs (visiting location register = VLR) et/ou un enregistreur de localisatiton nominale (home location register = HLR),
- détermination d'un chemin pour l'abonné destinataire avec l'information de sélection attribuée,
- émission de l'information de sélection déterminée par la liaison de données avec la premier terminal (SUT1) et
- choix de l'information de sélection reçue par le premier terminal.

2. Procédé selon la revendication 1, comprenant l'étape suivante :
- mise en place de la liaison de données au moyen d'une signalisation abonné-abonné (user-to-user-signalling) par un canal central de signalisation en utilisant le système de signalisation de CCITT n° 7.

3. Procédé selon la revendicaticn 1 ou 2, comprenant les étapes suivantes :
- entrée de l'information de sélection dans le premier terminal et adjonction d'un code indiquant un service souhaité et
- détermination de l'information de sélection par le point de commande de services (INSCP1) par analyse des possibilités de liaison disponibles seulement pour le service souhaité.

4. Procédé selon la revendication 3, comprenant, l'étape suivante :
- détermination de l'information de sélection par le point de commande de services (INSCP1) par analyse des tarifs de taxation à prendre en compte pour les liaisons possibles.

5. Procédé selon la revendication 3, comprenant l'étape suivante :
- détermination de l'information de sélection par le point de commande de services (INSCP1) par utilisation d'un sous-adressage (subadressing) selon une recommandation du CCITT I.330 pour permettre des communications entre des abonnés d'un réseau privé ou d'un réseau privé virtuel (VPN1, VPN2) par des terminaux d'un réseau public et des abonnés d'autres réseaux privés ou réseaux privés virtuels à des terminaux des autres réseaux privés ou privés virtuels.

6. Procédé selon la revendication 1, comprenant l'étape suivante :
- transmission d'une information de taxe déterminée pour la liaison entre les deux terminaux depuis le premier terminal au point de commande de services (INSCP1) via la liaison de données pour la gestion des taxes pour le réseau privé ou privé virtuel.
